# EUROPEAN PATENT APPLICATION

(11) **EP 1 760 470 A2**
(43) Date of publication of application: **07.03.2007**
(21) Application number: 06000084.1
(22) Date of filing: 03.01.2006
(51) Int. Cl.: G01N 35/02, B01F 11/00

(54) **Analyzer having fluid storage and injection mechanism and vibration mixer**

(30) Priority: 01.09.2005 CN 200510099665
(71) Applicant: Tera Autotech Corporation, Tachia, Taichung Hsien (TW)
(72) Inventor: Lee, Yi-Lung, Shalu Township Taichung County 433 (TW)
(74) Representative: Becker Kurig Straus

(57) **Abstract**

An analyzer (100) includes a vibration mixer (11) having a carrier (40) for holding solutions or reagents for mixing, a first motion unit (20) for reciprocally moving the carrier (40) in a first direction, and a second motion unit (30) for reciprocally moving the carrier (40) in a second direction perpendicular to the first direction, and a fluid storage and injection mechanism (12) supported on the vibration mixer (11). The fluid storage and injection mechanism (12) includes a rotary table (52), a driving member (51) for rotating the rotary table (52), and a plurality of storage and injection units (60) fastened spacedly to the rotary table (52). Each storage and injection unit (60) has a storage tank (62) for holding a fluid and an actuating member (63) mounted in the storage tank (62) and movable reciprocally in the storage chamber (621) for forcing the contained fluid out of the storage tank (62) upon movement of the respective storage and injection unit (60) with the rotary table (52) to a predetermined position.

## Description

### BACKGROUND OF THE INVENTION

### 1. Field of the Invention

The present invention relates generally to analyzers that can examine multiple properties of a fluid/reagent under test simultaneously, and more specifically to such an analyzer that comprises a fluid storage and injection mechanism and a vibration mixer for vibrating the fluid storage and injection mechanism in different directions to well mix various fluids/reagents carried in the fluid storage and injection mechanism.

### 2. Description of the Related Art

When wishing to mix different solutions or regents in a laboratory for analysis in an analyzer, the solutions or reagents are poured in different wells in a container, and then the container is set in the analyzer and vibrated by the analyzer through a vibration procedure. According to conventional analyzers, the vibration procedure is to reciprocate the container in one direction. Therefore, it takes much time to uniformly mix the solution or reagent.

Further, when wishing to mix different fluids to form a finished product in a conventional analyzer, it is achieved manually by taking each prepared fluid from the respective storage tank to a mixing tank and then vibrating the mixing tank to mix the added fluids into the desired mixture. Transferring different fluids from different storage tanks to a mixing tank by labor takes much time. An analyzer is known comprising a plurality of storage tanks for holding different fluids, and a movable syringe for picking up the contained fluid from each selected storage tank and injecting the received fluid into a mixing tank. After each injection operation, a cleaning fluid is guided into the movable syringe, and then the movable syringe is moved to a collector tank and operated to discharge the cleaning fluid into the collector tank. After this cleaning cycle, the movable syringe is moved to a next storage tank for picking up another fluid. This fluid transferring and syringe cleaning procedure is complicated, wasting much time.

### SUMMARY OF THE INVENTION

The present invention has been accomplished under the circumstances in view. It is one object of the present invention to provide an analyzer, which uses a vibration mixer that vibrates on a plane in all directions to accelerate the mixing of fluids.

It is another object of the present invention to provide an analyzer, which improves fluid mixing efficiency before analysis.

It is another object of the present invention to provide an analyzer, which has a simple structure and is practical in use.

To achieve these objects of the present invention, the analyzer comprises a base, a vibration mixture mounted on the base, and a fluid storage and injection mechanism supported above the vibration mixer. The vibration mixer comprises a first motion unit, a second motion unit, and a carrier. The first motion unit has a first rail and a second rail arranged in parallel and extending in a first direction, a sliding device coupled to and movable along the first and second rails of the first motion unit, and a drive coupled to the sliding device of the first motion unit for reciprocally moving the sliding device of first motion unit in the first direction. The second motion unit has a first rail and a second rail arranged in parallel and extending in a second direction perpendicular to the first direction and defining with the first and second rails of the first motion unit a motion zone, a sliding device coupled to and movable along the first and second rails of the second motion unit, and a drive coupled to the sliding device of the second motion unit for reciprocally moving the sliding device of the second motion unit in the second direction perpendicular to the first direction. The carrier is slidably coupled to the sliding device of the first motion unit and the sliding device of the second motion unit, and movable by the first motion unit and the second motion unit on a plane within the motion zone. The fluid storage and injection mechanism has a rotary table assembly provided with a driving member and a rotary table coupled to the driving member and rotatable by the driving member, and a plurality of storage and injection units each having a storage tank fastened to a periphery of the rotary table, and an actuating member. The storage tank has a storage chamber for holding a fluid and an injection hole at a bottom side of the storage chamber, and the actuating member is mounted in the storage chamber of the storage tank and movable reciprocally in the storage chamber for forcing the contained fluid out of the storage chamber through the injection hole upon movement of the respective storage and injection unit with the rotary table to a predetermined position.

### BRIEF DESCRIPTION OF THE DRAWINGS

FIG 1 is a schematic top view of an analyzer according to a preferred embodiment of the present invention.
FIG 2 is a schematic side view of the analyzer according to the preferred embodiment of the present invention.
FIG 3 is a schematic top view of the fluid storage and injection mechanism of the analyzer according to the preferred embodiment of the present invention.
FIG 4 is a schematic side view of the fluid storage and injection mechanism of the analyzer according to the preferred embodiment of the present invention.
FIG 5 is a schematic top view of the vibration mixer of the analyzer according to the preferred embodiment of the present invention.
FIGS. 6 and 7 are schematic drawings showing the operation of the vibration mixer of the analyzer according to the preferred embodiment of the present invention.

### DETAILED DESCRIPTION OF THE INVENTION

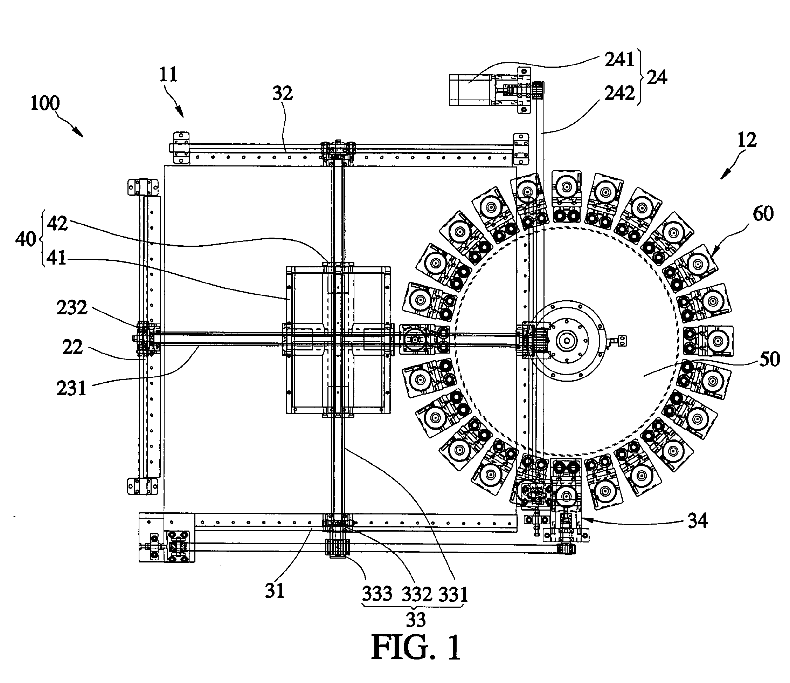

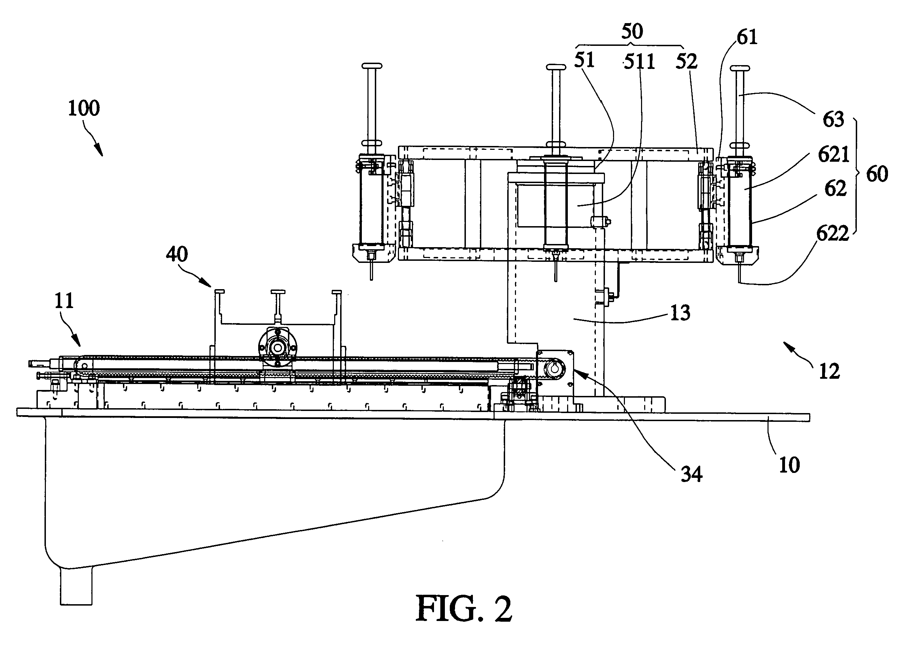

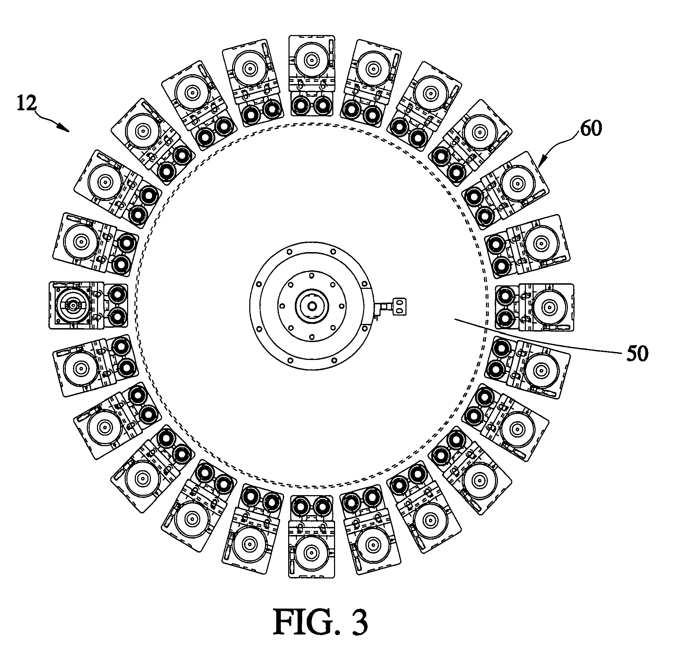

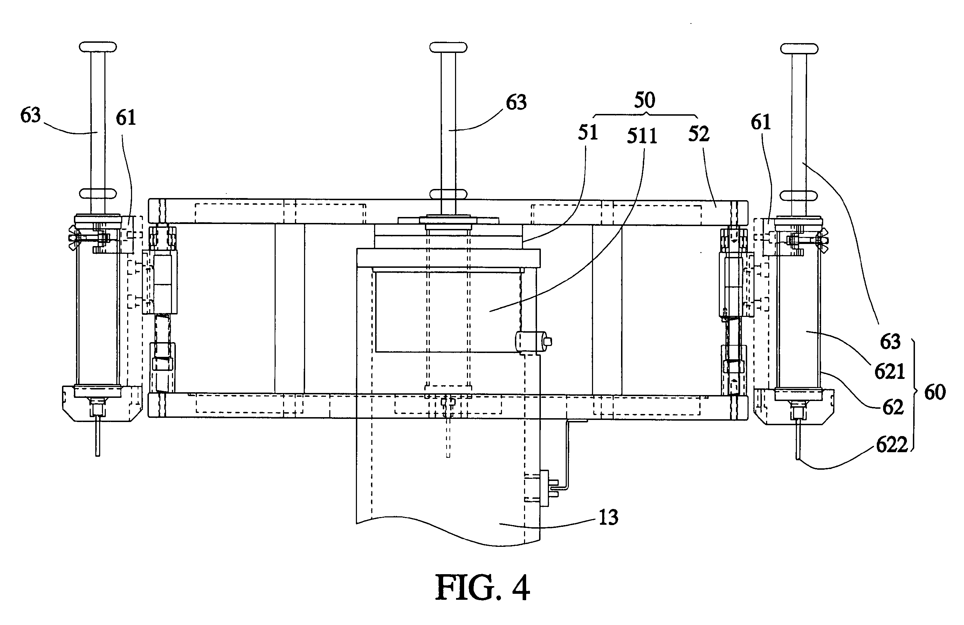

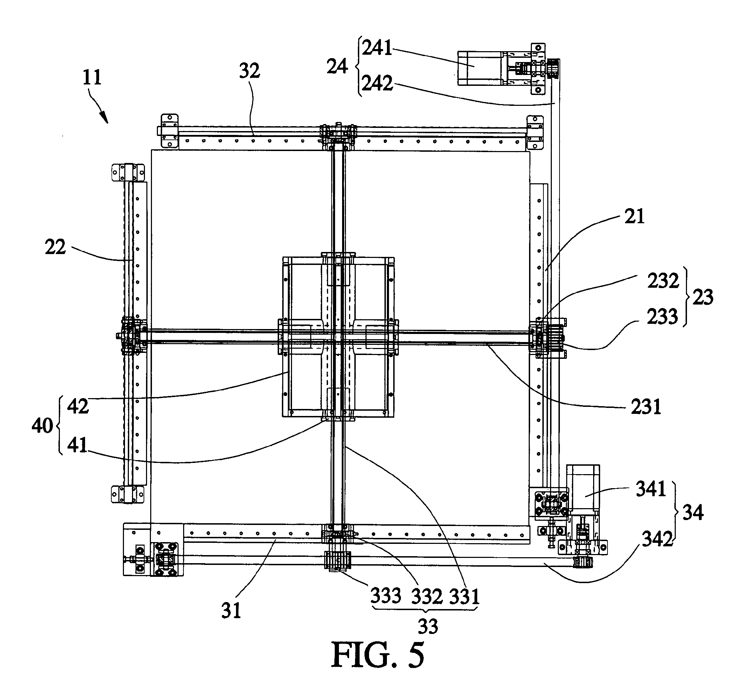

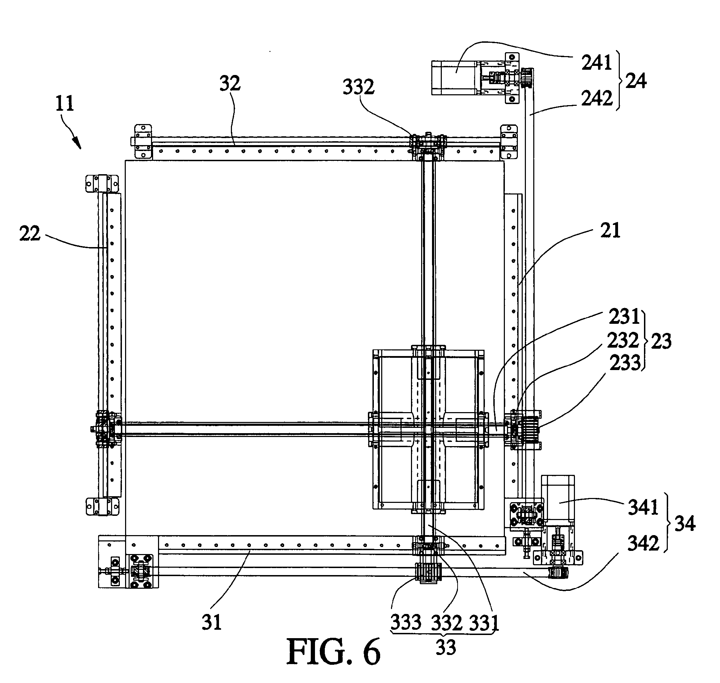

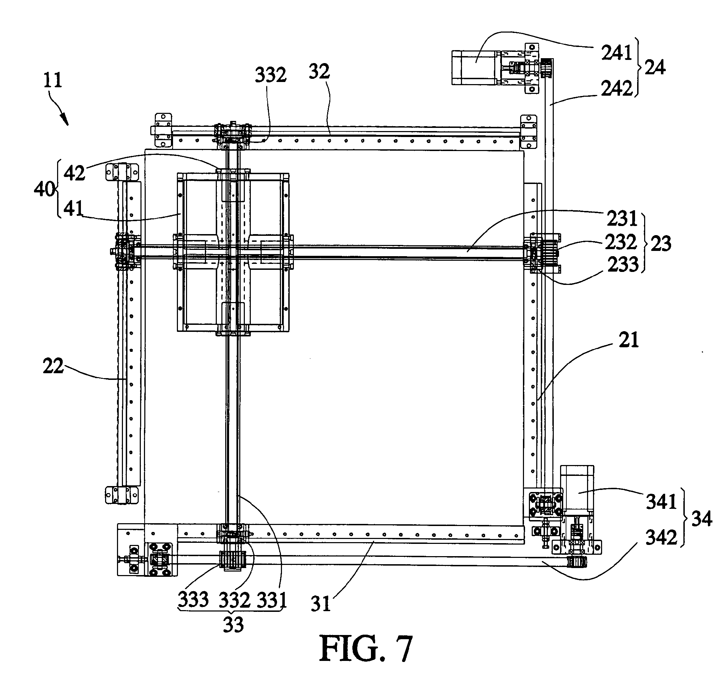

Referring to FIGS. 1-7, an analyzer **100** in accordance with the preferred embodiment of the present invention is shown comprising a base frame **10,** a vibration mixer **11**, and a fluid storage and injection mechanism **12.**

As shown in FIGS. 1-5, the vibration mixer **11** is mounted on the base frame **10**, comprising a first motion unit **20,** a second motion unit **30,** and a carrier **40.**

The first motion unit **20** comprises a first rail **21,** a second rail **22,** a sliding device **23,** and a drive **24.**

The first rail **21** and the second rail **22** are arranged in parallel on the base frame **10,** and spaced from each other at a predetermined distance. The sliding device **23** comprises a link **231,** two connectors **232,** and a driven member **233.** The link **231** is coupled to the first rail **21** and the second rail **22** and extending in direction perpendicular to the extending direction of the rails **21, 22,** having two distal ends respectively extending over the rails **21, 22.** The two connectors **232** are respectively fixedly fastened to the two ends of the link **231** and respectively slidably coupled to the first rail **21** and the second rail **22** to hold the link **231** between the rails **21, 22,** for enabling the link **231** to be reciprocated by an external force along the rails **21, 22** in a first direction, namely, the X-axis direction. The driven member **233** according to this embodiment is a gear pivoted to one of the two connectors **232.**

The drive **24** comprises a motor **241** and a transmission rod **242.** The transmission rod **242** according to this embodiment is a screw rod disposed at an outer side relative to the first rail **21** in a parallel manner and meshed with the driven member **233.** The motor **241** is a servomotor, having a pinion (not shown) fixedly mounted on the output shaft thereof and meshed with the transmission rod **242.** Upon operation of the motor **241,** the transmission rod **242** is rotated to move the driven member **233,** thereby causing the sliding device **23** to be moved along the rails **21, 22.** By means of controlling forward/backward rotation of the motor **241,** the sliding device **23** is driven to move reciprocally.

The second motion unit **30** comprises a first rail **31,** a second rail **32,** a sliding device **33,** and a drive **34.**

The first rail **31** and the second rail **32** are arranged in parallel on the base frame **10,** and spaced from each other at a predetermined distance. Further, the rails **31, 32** of the second motion unit **30** and the rails **21, 22** of the first motion unit **20** are arranged at right angles, defining a motion zone. The sliding device **33** comprises a link **331,** two connectors **332,** and a driven member **333.** The link **331** is coupled to the first rail **31** and the second rail **32** and extending in direction perpendicular to the extending direction of the rails **31, 32,** having two distal ends respectively extending over the rails **31, 32.** The two connectors **332** are respectively fixedly fastened to the two ends of the link **331** and respectively slidably coupled to the first rail **31** and the second rail **32** to hold the link **331** between the rails **31, 32,** for enabling the link **331** to be reciprocated by an external force along the rails **31, 32** in a second direction, namely, the Y-axis direction. The driven member **333** according to this embodiment is a gear pivoted to one of the two connectors **332.**

The drive **34** comprises a motor **341** and a transmission rod **342.** The transmission rod **342** according to this embodiment is a screw rod disposed at an outer side relative to the first rail **31** in a parallel manner and meshed with the driven member **333.** The motor **341** is a servomotor, having a pinion (not shown) fixedly mounted on the output shaft thereof and meshed with the transmission rod **342.** Upon operation of the motor **341,** the transmission rod **342** is rotated to move the driven member **333,** thereby causing the sliding device **33** to be moved along the rails **31, 32.** By means of controlling forward/backward rotation of the motor **341,** the sliding device **33** is driven to move reciprocally.

The carrier **40** is adapted to carry a multi-well container for holding different solutions or reagents for mixing, comprising a flat rectangular carrier base **41** and four sleeves **42** respectively provided at the four sides of the flat rectangular carrier base **41.** The four sleeves **42** are arranged in two pairs respectively sleeved onto the links **231**, **331** such that the links **231, 331** can move the carrier **40** within the aforesaid motion zone.

Referring to FIGS. 1-4 again, the fluid storage and injection mechanism **12** is supported on a support **13** above the vibration mixer **11.** The support **13** has one end fixedly fastened to the base frame **10,** and the other end connected to the fluid storage and injection mechanism **12.** The fluid storage and injection mechanism **12** comprises a rotary table assembly **50,** and a plurality of storage and injection units **60.**

The rotary table assembly **50** comprises a driving member **51** and a rotary table **52.** The driving member **51** comprises a motor **511.** The motor **511** is mounted inside the support **13.** The rotary table **52** is shaped like a disc and coupled to the motor **511** of the driving member **51** for synchronous rotation with the motor **511.** The periphery of the rotary table **51** is equiangularly divided into a plurality of holder portions.

Each storage and injection unit **60** is comprised of a connecting member **61,** a storage tank **62,** and an actuating member **63.** The connecting member **61** is a bracket fixedly fastened with one end thereof to one holder portion of the rotary table **52** of the rotary table assembly **51.** The storage tank **62** is fastened to the connecting member **61** and suspending outside the rotary table **52,** defining a storage chamber **621** for holding a fluid, and an injection hole **622** at the bottom side of the storage chamber **621.** The actuating member **63** is a piston mounted in the storage chamber **621** of the storage tank **62,** and movable forwardly and backwardly in the storage chamber **621.** The actuating member **63** is kept in close contact with the inside wall of the storage chamber **621** such that the storage fluid does not flow out of the injection hole **622** when the actuating member **63** does no work.

The operation of the present invention is described hereinafter. After the container that holds prepared solutions or reagents has fastened to the carrier **40,** operate the drives **24** and **34** to move the driven member **233** and **333** respectively, causing the link **231** of the first motion unit **20** to be moved in a first direction and the link **331** of the second motion unit **30** to be moved in a second direction. At this time, the carrier **40** is carried by the links **231** and **331** to a predetermined location adjacent to one side of the fluid storage and injection mechanism **12** below one of the storage and injection units **60.**

At this time, different prepared fluids are respectively filled in the storage chambers **621** of the storage tanks **62** of the storage and injection unit **60** respectively, and then the driving member **51** is started to rotate the rotary table **52** at a predetermined speed. When one storage and injection unit **60** reached the injection position right above the carrier **40,** the actuating member **63** of the respective storage and injection unit **60** is immediately driven by an external force (not shown) to move downwards to force a certain amount of the respective fluid out of the respective storage chamber **621** through the respective injection hole **622** into the container at the carrier **40,** and then another storage and injection unit **60** can be moved, if desire, by the rotation of the rotary table **51** to reach the injection position right above the container at the carrier **40** for further injection process, and then the injection process can be repeated again and again subject to the user's requirement. When the injection processes are completed, the drives **24** and **34** are operated to move the sliding device **23** in the first direction and the sliding device **33** in the second direction. After movement of the drives **24** and **34** in clockwise direction through a predefined period, the drives **24** and **34** can be moved in counter-clockwise direction. These clockwise and counter-clockwise movements can be alternatively performed, causing the fluids or reagents contained in the container to be well mixed.

As indicated above, the invention provides an analyzer in which the vibration mixer **11** can be oscillated on a plane in different directions to well mix the fluids/reagents carried thereon within a short period. Further, the fluid storage and injection mechanism **12** has a plurality of storage and injection units **60** for storing and dispensing many different fluids/reagents, improving the working efficiency.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. An analyzer comprising:
a base;
a vibration mixer mounted on said base, said vibration mixer having a first motion unit, a second motion unit, and a carrier;
wherein said first motion unit has a first rail and a second rail arranged in parallel and extending in a first direction, a sliding device coupled to and movable along the first and second rails of said first motion unit, and a drive coupled to the sliding device of said first motion unit for reciprocally moving the sliding device of said first motion unit in said first direction;
wherein said second motion unit has a first rail and a second rail arranged in parallel and extending in a second direction perpendicular to said first direction and defining with the first and second rails of said first motion unit a motion zone, a sliding device coupled to and movable along the first and second rails of said second motion unit, and a drive coupled to the sliding device of said second motion unit for reciprocally moving the sliding device of said second motion unit in said second direction perpendicular to said first direction;
wherein said carrier is slidably coupled to the sliding device of said first motion unit and the sliding device of said second motion unit and movable by said first motion unit and said second motion unit on a plane within said motion zone; and
a fluid storage and injection mechanism supported above said vibration mixer, said fluid storage and injection mechanism having a rotary table assembly provided with a driving member and a rotary table coupled to said driving member and rotatable by said driving member, and a plurality of storage and injection units each having a storage tank fastened to a periphery of said rotary table, and an actuating member; wherein said storage tank has a storage chamber for holding a fluid and an injection hole at a bottom side of said storage chamber, and the actuating member is mounted in said storage chamber of said storage tank and is movable reciprocally in said storage chamber for forcing the contained fluid out of said storage chamber through said injection hole upon movement of the respective storage and injection unit with said rotary table to a predetermined position.

2. The analyzer as claimed in claim 1, wherein the sliding device of said first motion unit comprises a link inserted through said carrier and coupled to the first rail and second rail of said first motion unit and extending in direction perpendicular to the extending direction of the first and second rails of said first motion unit, the link of said first motion unit having two distal ends thereof respectively extending over the rails of said first motion unit, two connectors respectively fixedly fastened to the two ends of the link of said first motion unit and respectively pivoted to the first rail and second rail of said first motion unit to hold the link of said first motion unit between the first rail and second rail of said first motion unit and for enabling the link of said first motion unit to be reciprocally moved along the first and second rails of said first motion unit, and a driven member coupled to the drive of said first motion unit and movable by the drive of said first motion unit to drive the link of said first motion unit to move said carrier.

3. The analyzer as claimed in claim 1, wherein the sliding device of said second motion unit comprises a link inserted through said carrier and coupled to the first rail and second rail of said second motion unit and extending in direction perpendicular to the extending direction of the first and second rails of said second motion unit, the link of said second motion unit having two distal ends thereof respectively extending over the first and second rails of said second motion unit, two connectors respectively fixedly fastened to the two ends of the link of said second motion unit and respectively pivoted to the first rail and second rail of said second motion unit to hold the link of said second motion unit between the first rail and second rail of said second motion unit and for enabling the link of said second motion unit to be reciprocally moved along the first and second rails of said second motion unit, and a driven member coupled to the drive of said second motion unit and movable by the drive of said second motion unit to drive the link of said second motion unit to move said carrier.

4. The analyzer as claimed in claim 1, wherein the drive of said first motion unit comprises a transmission rod disposed at an outer side relative to the first rail of said first motion unit in a parallel manner and meshed with said first motion unit, and a motor coupled to the transmission rod of said first motion unit for rotating the transmission rod of said first motion unit to further move the sliding device of said first motion unit along the first rail and second rail of said first motion unit.

5. The analyzer as claimed in claim 1, wherein the drive of said second motion unit comprises a transmission rod disposed at an outer side relative to the first rail of said second motion unit in a parallel manner and meshed with said second motion unit, and a motor coupled to the transmission rod of said second motion unit for rotating the transmission rod of said second motion unit to further move the sliding device of said second motion unit along the first rail and second rail of said second motion unit.

6. The analyzer as claimed in claim 1, wherein said carrier is adapted to carry a multi-well container for holding different solutions or reagents for mixing.

7. The analyzer as claimed in claim 1, wherein said carrier comprises a base and four sleeves respectively provided at said base for insertion of said first motion unit and said second motion unit for enabling said carrier to be moved by said first motion unit and said second motion unit within said motion zone.

8. The analyzer as claimed in claim 1, wherein said driving member of said rotary table assembly comprises a motor mounted on a support at said vibration mixer for rotating said rotary table relative to said vibration mixer.

9. The analyzer as claimed in claim 1, wherein said rotary table is shaped like a disc coupled to said driving member of said rotary table assembly, having the periphery thereof divided into a plurality of holder portions for holding said storage and injection units respectively.

10. The analyzer as claimed in claim 1, wherein said storage and injection units each have a connecting member which is a bracket for connecting the respective storage tank to said rotary table.

11. The analyzer as claimed in claim 1, wherein said actuating member is a piston peripherally stopped against an inside wall of the respective storage tank.

12. The analyzer as claimed in claim 1, wherein said fluid storage and injection mechanism is supported on a support at said vibration mixer.

13. An analyzer comprising:
a base;
a vibration mixer mounted on said base, said vibration mixer comprising a first motion unit, a second motion unit, and a carrier, said first motion unit and said second motion unit being arranged perpendicularly and defining a motion zone, said carrier being slidably coupled to said first motion unit and said second motion unit and movable by said first motion unit and said second motion unit on a plane within said motion zone; and
a fluid storage and injection mechanism supported above said vibration mixer, said fluid storage and injection mechanism comprising a plurality of storage and injection units, said storage and injection units each comprising a storage tank having a storage chamber for holding a fluid and an injection hole at a bottom side of said storage chamber, and an actuating member mounted in said storage chamber of said storage tank and movable reciprocally in said storage chamber for forcing the contained fluid out of said storage chamber through said injection hole upon movement of the respective storage and injection unit with said rotary table to a predetermined position.

14. The analyzer as claimed in claim 13, wherein said carrier is adapted to carry a multi-well container for holding different solutions or reagents for mixing.

15. The analyzer as claimed in claim 13, wherein said fluid storage and injection mechanism further comprises a rotary table assembly for carrying said storage and injection units, said rotary table assembly comprising a driving member and a rotary table coupled to said driving member and rotatable by said driving member; wherein said fluid storage and injection units are mounted to a periphery of the rotary table.

16. An analyzer comprising:
a vibration mixer having at least one motion unit, and a carrier coupled to said at least one motion unit and movable by said at least one motion unit on a plane; and
a fluid storage and injection mechanism supported above said vibration mixer, said fluid storage and injection mechanism comprising at least one storage and injection unit having a storage tank with a storage chamber for holding a fluid and an injection hole at a bottom side of said storage chamber, and an actuating member mounted in said storage chamber of said storage tank and movable reciprocally in said storage chamber for forcing the contained fluid out of said storage chamber through said injection hole.
